# FASCICULE DE BREVET EUROPEEN

(11) **EP 2 927 577 B1**
(45) Date de publication et mention de la délivrance du brevet: **27.12.2017**
(21) Numéro de dépôt: 15160420.4
(22) Date de dépôt: 23.03.2015
(51) Int. Cl.: F21V 13/04, G02B 17/08, G02B 27/09, G06K 9/00, G02B 19/00

(54) **Optique d'éclairage pour dispositif de mesure biometrique**
BELEUCHTUNGSOPTIK FÜR BIOMETRISCHE MESSVORRICHTUNG
LIGHTING OPTIC FOR BIOMETRIC MEASUREMENT DEVICE

(30) Priorité: 31.03.2014 FR 1400782
(43) Date de publication de la demande: 07.10.2015
(73) Titulaire: Morpho, 92130 Issy-les-Moulineaux (FR)
(72) Inventeur: Monteilliet, Gilles, 92130 Issy Les Moulineaux (FR); Fourre, Joël-Yann, 92130 Issy Les Moulineaux (FR)
(74) Mandataire: Cabinet Plasseraud

(56) Documents cités:
- EP-A1- 0 280 041
- EP-A2- 1 357 333
- WO-A1-2005/048362
- WO-A1-2011/028620
- JP-A- 2012 038 678
- US-A1- 2006 285 347

## Description

La présente invention concerne une optique d'éclairage, un ensemble d'éclairage et un dispositif de mesure biométrique qui comprend une telle optique ou ensemble d'éclairage.

Un ensemble d'éclairage comprend en général une source de lumière et une optique d'éclairage dont le but est de collecter la lumière qui est produite par la source, et de la répartir dans un faisceau lumineux dont la forme est adaptée en fonction de l'utilisation de cette lumière. Pour cela, l'optique d'éclairage doit être adaptée à la source de lumière, notamment à la forme de la zone d'émission lumineuse de cette source. De plus, les caractéristiques du faisceau lumineux qui est produit par l'optique d'éclairage doivent correspondre au champ optique à éclairer et à son contenu. Ainsi, la performance d'une optique d'éclairage comprend son rendement de collecte, c'est-à-dire la proportion de l'énergie lumineuse qui est émise par la source et qui produit un éclairement utile. D'autres caractéristiques sont notamment la taille du champ optique qui est éclairé, l'uniformité ou la répartition de l'éclairement à l'intérieur de ce champ, l'ouverture angulaire du faisceau, etc.

Des difficultés particulières peuvent concerner la réalisation d'éclairages pour lesquels le faisceau de lumière est incliné par rapport à un plan d'objet, par exemple un plan de focalisation d'un appareil de saisie d'image. On entend par faisceau de lumière incliné par rapport à un plan une configuration spatiale dans laquelle une direction moyenne du faisceau forme un angle qui est non nul et inférieur à 90° (degré) avec une direction perpendiculaire au plan. La forme du faisceau doit alors être adaptée en fonction de cette inclinaison, pour que toute la partie souhaitée du plan d'objet soit éclairée convenablement.

D'autres critères qui concernent une optique d'éclairage sont sa compatibilité avec une valeur de puissance lumineuse qui est recherchée, la compatibilité avec un éventuel dispositif de refroidissement de la source de lumière, son encombrement, la facilité d'assemblage avec la source de lumière et le reste du dispositif, et son prix de revient.

Des applications particulières des ensembles d'éclairage sont les dispositifs de mesure biométrique. De tels dispositifs peuvent notamment réaliser des images d'empreintes cutanées, des images du visage, de l'iris, de réseaux veineux sous-cutanés d'un doigt ou de la paume, etc. En effet, certains au moins de ces dispositifs peuvent requérir en outre les exigences suivantes :
- un éclairage suffisamment uniforme pour un champ optique qui peut être large et posséder une section transversale allongée dans une direction ;
- un éclairage suffisamment intense, notamment lorsque l'objet à photographier peut être mobile ;
- un éclairage qui conserve ses qualités lorsque l'objet est déplacé perpendiculairement au plan d'objet, notamment sur un intervalle de profondeur de champ qui est souhaité pour l'appareil de saisie d'image ; et
- une direction d'éclairage qui peut être oblique par rapport au plan d'objet, notamment pour un capteur d'empreintes cutanées sans contact, et aussi possiblement pour saisir une image de visage.

Des optiques d'éclairage connues avant la présente invention, qui sont adaptées pour des diodes électroluminescentes, sont constituées chacune par une partie d'optique centrale dioptrique, typiquement une lentille convergente, et par une partie d'optique périphérique, telle qu'un réflecteur parabolique. Une telle optique d'éclairage constitue un collimateur dont le rendement de collecte de lumière est en général de l'ordre de 50% seulement. Le faisceau de lumière qui est produit en sortie présente une structure de faisceau parallèle, et n'est pas bien adapté pour éclairer de façon homogène un champ optique dont les dimensions sont typiquement 80 x 30 x 45 mm³. En outre, à cause de la structure composite du faisceau lumineux qui est produit par une telle optique d'éclairage, il est très difficile de conférer une divergence à ce faisceau lumineux sans que des anneaux clairs et sombres apparaissent dans le volume utile qui est éclairé. Autrement dit, de telles optiques à structure mixte dioptrique-catadioptrique ne sont pas adaptées pour produire un éclairage qui soit à la fois divergent et uniforme.

L'invention a alors pour but de proposer un dispositif biométrique, pour lequel certaines au moins des caractéristiques précitées sont améliorées par rapport aux optiques déjà existantes.

Selon un premier aspect de l'invention, l'optique d'éclairage comprend :
- un réflecteur paraboloïdal ou ellipsoïdal, qui est formé par une portion de paraboloïde ou d'ellipsoïde à symétrie de révolution autour d'un axe de ce réflecteur, et qui possède un foyer ; et
- une surface dioptrique, agencée de sorte qu'un faisceau lumineux qui est issu du foyer puis réfléchi par le réflecteur traverse ensuite la surface dioptrique.

L'optique d'éclairage du dispositif de l'invention est caractérisée en ce que la surface dioptrique possède deux valeurs différentes de puissance optique selon deux directions qui sont perpendiculaires entre elles et parallèles à la surface dioptrique, et ces deux valeurs de puissance optique sont négatives.

Pour des rayons lumineux qui sont issus du foyer, le réflecteur a une fonction de collimateur ou de composant optique convergent.

En aval du réflecteur le long des rayons lumineux, la surface dioptrique a une fonction de composant optique divergent. De cette façon, le faisceau lumineux peut éclairer de façon homogène un champ optique qui est large. En outre, la nature partiellement cylindrique de la surface dioptrique procure au faisceau lumineux une forme de section transversale qui est adaptée pour un champ optique allongé transversalement dans une direction. La forme de la section transversale du faisceau peut aussi convenir à une configuration d'éclairage oblique par rapport à un plan d'objet.

Une optique d'éclairage selon l'invention peut être réalisée de façon simple et économique. En outre, elle provoque un encombrement restreint, qui est compatible avec des dispositifs de petites dimensions dans lesquels cette optique peut être intégrée.

Par ailleurs, une optique d'éclairage selon l'invention peut être adaptée simplement en fonction de la source de lumière à laquelle elle est associée, pour obtenir un rendement de collecte de lumière qui est élevé. En effet, lorsque la source de lumière est située autour du foyer du réflecteur, le réflecteur occupe un secteur angulaire qui est large devant la source, si bien qu'une fraction importante de la lumière est dirigée à travers la surface dioptrique.

De plus, une optique d'éclairage selon l'invention peut être adaptée simplement en fonction de la taille de la source lumineuse, notamment en appliquant une homothétie isotrope ayant pour pôle le foyer du réflecteur.

Enfin, une optique d'éclairage selon l'invention peut avoir une face d'entrée de lumière dont la forme est adaptée en fonction d'une zone d'émission lumineuse de la source de lumière, pour augmenter encore plus le rendement de collecte de l'ensemble d'éclairage. En particulier, la face d'entrée de l'optique d'éclairage peut être plane lorsque la zone d'émission de la source de lumière est elle-même plane, et la face d'entrée peut être plane ou sphérique lorsque la zone d'émission est elle-même sphérique.

Les perfectionnements suivants peuvent avantageusement être utilisés dans des modes de réalisation préférés de l'invention, séparément ou en combinaison de plusieurs d'entre eux :
- le réflecteur peut être une portion de paraboloïde de révolution qui possède un rayon compris entre 8 mm et 45 mm, préférentiellement compris entre 25 mm et 35 mm, notamment sensiblement égal à 30,5 mm ;
- une des deux valeurs de puissance optique de la surface dioptrique peut être comprise entre 20% et 80% de l'autre valeur, préférentiellement comprise entre 40% et 60% de cette autre valeur, notamment sensiblement égale à 57% de celle-ci ;
- une première des deux valeurs de puissance optique de la surface dioptrique peut être comprise entre -30 dioptries et 0 dioptrie, préférentiellement comprise entre -10 dioptries et -3 dioptries, notamment sensiblement égale à -5 dioptries, et une seconde des deux valeurs de puissance optique de la surface dioptrique peut être comprise entre - 40 dioptries et -1 dioptrie, préférentiellement comprise entre -20 dioptries et - 5 dioptries, notamment sensiblement égale à -10 dioptries ; et
- l'optique d'éclairage peut être agencée de sorte que tout rayon lumineux qui est issu du foyer, puis qui est réfléchi par le réflecteur et traverse ensuite la surface dioptrique, possède avant d'être réfléchi, une valeur d'angle d'inclinaison par rapport à l'axe du réflecteur qui est comprise entre 5° (degré) et 120°.

Dans des modes de réalisation préférés de l'invention, l'optique d'éclairage peut comprendre un bloc de matériau transparent à deux extrémités latérales opposées, avec une face d'entrée, une face intermédiaire et une face de sortie, les trois faces étant disposées entre les deux extrémités latérales. La face intermédiaire est alors métallisée et constitue le réflecteur, la face de sortie constitue la surface dioptrique, et la face d'entrée est située à une distance du foyer qui est inférieure à 15% d'un rayon de conique du réflecteur. De cette façon, le faisceau lumineux qui est issu du foyer pénètre dans le bloc de matériau transparent par la face d'entrée, subit une réflexion sur la face intermédiaire à l'intérieur du bloc, et ressort du bloc en traversant la face de sortie. Pour un tel mode de réalisation de l'invention, le bloc de matériau transparent peut comporter deux portions de fixation qui sont situées aux deux extrémités latérales opposées. De telles portions de fixation peuvent être adaptées pour fixer le bloc sur un support externe sans occulter le faisceau lumineux qui pénètre dans le bloc par la face d'entrée, est réfléchi sur la face intermédiaire, puis qui ressort par la face de sortie. De telles réalisations de l'invention sous la forme de blocs de matériau transparent peuvent être produites facilement, notamment par moulage de matériaux du type acrylate. Le dispositif selon l'invention peut comprendre un ensemble d'éclairage qui comprend une source de lumière à diode électroluminescente et une optique d'éclairage. Dans un tel ensemble d'éclairage, la source de lumière est placée sur le foyer du réflecteur.

Lorsque l'optique d'éclairage est formée d'un bloc de matériau transparent, celui-ci peut comporter des moyens de positionnement qui sont disposés à proximité de la face d'entrée, et qui sont adaptés pour maintenir la source de lumière devant cette face d'entrée lorsque la source de lumière est engagée dans les moyens de positionnement. Ces moyens de positionnement peuvent en outre être adaptés pour déterminer un espacement entre la source de lumière et la face d'entrée du bloc de matériau transparent. Un tel espacement peut être utile pour éviter qu'une chaleur produite par la source lumineuse dégrade le bloc de matériau transparent, ou bien détériore la source lumineuse elle-même. Pour augmenter le rendement de collecte de lumière, la face d'entrée du bloc de matériau transparent peut avantageusement s'étendre parallèlement à la zone d'émission lumineuse de la source de lumière, lorsque cette source de lumière est engagée dans les moyens de positionnement.

Un tel ensemble d'éclairage peut lui-même être compact, peu onéreux, et simple à assembler, tout en ayant une efficacité lumineuse importante. En outre, il est adapté pour éclairer un plan d'objet obliquement, c'est-à-dire avec un angle entre le faisceau lumineux et une direction perpendiculaire au plan d'objet qui est compris entre 0 et 90°. Les dispositifs de mesure biométrique de l'invention peuvent être des systèmes de saisie d'empreinte cutanée. Dans ce cas, l'éclairage oblique est particulièrement adapté pour augmenter un contraste d'ombre des reliefs et creux de la peau qui forment l'empreinte cutanée. Dans des réalisations préférées de tels dispositifs de mesure biométrique, certaines au moins des caractéristiques additionnelles suivantes peuvent être utilisées :
- le dispositif peut comprendre en outre un appareil de saisie d'image qui possède un axe optique formant direction de saisie d'image, et une distance d'éclairement qui est mesurée entre la surface dioptrique d'une part, et d'autre part un point d'intersection entre l'axe du réflecteur de l'optique d'éclairage et l'axe optique formant direction de saisie d'image, peut être comprise entre 15 cm et 25 cm le long de l'axe du réflecteur ;
- un angle entre l'axe du réflecteur de l'optique d'éclairage et l'axe optique formant direction de saisie d'image, peut être compris entre 24° et 44° ; et
- la diode électroluminescente peut être adaptée pour produire des flashes lumineux qui chacun ont chacun une puissance d'au moins 2 W (watt) et une durée inférieure à 0,4 ms (milliseconde). Dans ces conditions, l'appareil de saisie d'image pour fournir à chaque flash lumineux une image qui est exploitable pour des mesures biométriques.

D'autres particularités et avantages de la présente invention apparaîtront dans la description ci-après d'un exemple de réalisation non limitatif, en référence aux dessins annexés, dans lesquels :
- les figures 1 à 7 sont des vues en projection et en perspective d'une même optique d'éclairage conforme à l'invention ; et
- la figure 8 est un schéma de principe d'un dispositif de mesure biométrique conforme à l'invention, pour saisir des empreintes cutanées.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

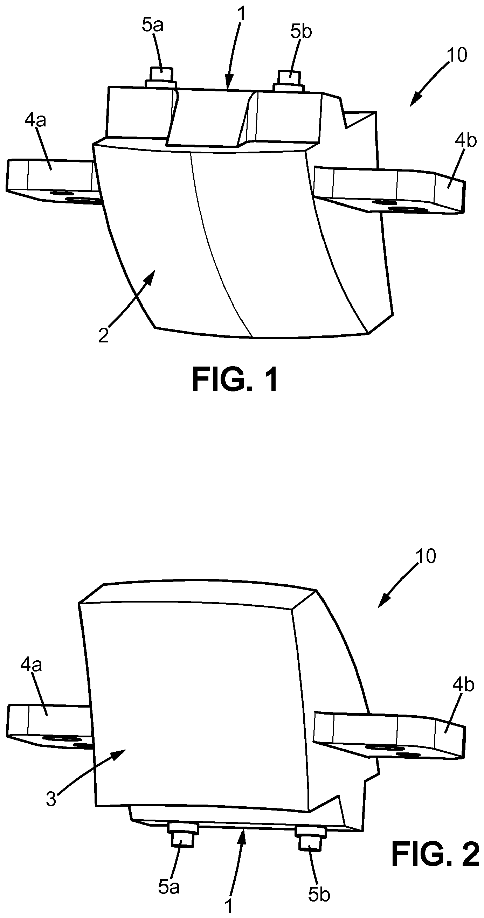

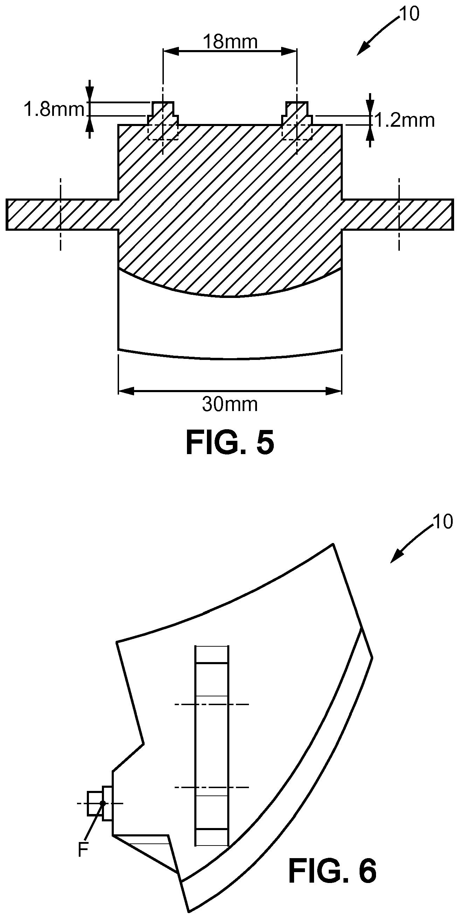

Conformément aux figures 1 à 7, une optique d'éclairage qui est conforme à l'invention est constituée d'un bloc 10 de matériau qui est homogène, transparent et réfringent pour la lumière visible. Par exemple, ce peut être un bloc de poly(méthacrylate de méthyle), ou PMMA, dont une face est rendue réfléchissante, par exemple par métallisation de cette face. De façon connue, l'indice de réfraction du PMMA est compris entre 1,48 et 1,51 environ pour la lumière visible et proche infrarouge, correspondant à des longueurs d'onde qui sont comprises entre 0,36 µm (micromètre) et 1,0 µm.

Les références utilisées dans les figures 1 à 7 ont les significations suivantes :
1 face d'entrée de la lumière
2 face intermédiaire
3 face de sortie de la lumière
4a et 4b portions de fixation de l'optique d'éclairage, optionnelles pour l'invention
5a et 5b tétons, aussi optionnels

Les deux portions 4a et 4b sont situées sur deux côtés latéraux opposés du bloc 10, et sont destinées à faciliter la fixation du bloc 10 sur un support externe. Les portions 4a et 4b, peuvent avoir des formes quelconques et être pourvues de perçages, en fonction du support externe.

Entre ses deux côtés opposés, le bloc 10 est limité par plusieurs surfaces, parmi lesquelles la face d'entrée 1, la face intermédiaire 2 et la face de sortie 3 qui ont des fonctions optiques. Ces faces 1 à 3 sont disposées de sorte que des rayons lumineux puissent pénétrer dans le bloc 10 à travers la face d'entrée 1, être réfléchis à l'intérieur du bloc 10 sur la face intermédiaire 2, puis ressortir à travers la face de sortie 3.

La face d'entrée 1 peut avoir une forme quelconque, mais de préférence elle est adaptée pour accroître la quantité de lumière qui pénètre dans le bloc 10. Notamment, la face d'entrée 1 peut être adaptée en fonction de la forme d'une zone d'émission d'une source lumineuse qui est placée en vis-à-vis de cette face d'entrée 1. Par exemple, la face d'entrée 1 peut être plane et rectangulaire, de dimensions 15,2 mm (millimètre) par 7,6 mm, lorsque la source lumineuse est une diode électroluminescente (LED) dont la zone d'émission est plane de dimensions 4,6 mm par 2,6 mm. Les tétons 5a ou 5b peuvent être situés de part et d'autre de la face d'entrée 1 pour déterminer le placement de la source lumineuse par rapport au bloc 10. Préférablement, ils sont disposés de sorte que la zone d'émission de la source lumineuse soit centrée par rapport à la face d'entrée 1. Ils peuvent être remplacés par toute autre forme qui est adaptée au modèle de la source lumineuse qui est utilisée, et à la précision qui est nécessaire pour le placement de la source lumineuse par rapport au bloc 10. En particulier, une telle précision peut être obtenue plus facilement en réduisant le nombre de pièces différentes qui relient la position de la source lumineuse au bloc 10. En outre, les tétons 5a et 5b, ou les formes équivalentes qui sont mises en oeuvre, peuvent avantageusement être conçus pour maintenir un écartement entre la zone d'émission de la source lumineuse et la face d'entrée 1 du bloc 10. Pour cela, chaque téton 5a ou 5b peut être pourvu d'un épaulement à sa base, qui empêche un rapprochement de la source lumineuse contre le bloc 10 en-deçà de la hauteur d'un tel épaulement. Cette hauteur d'épaulement peut être de 1,2 mm, par exemple. De façon générale, l'écartement entre la zone d'émission de la source lumineuse et la face d'entrée 1 du bloc 10 peut être fixée entre 0,1 mm et 3 mm.

La face intermédiaire 2 est pourvue d'un revêtement réfléchissant qui lui procure une fonction de miroir pour un rayon lumineux qui est incident sur cette face 2 à l'intérieur du bloc 10. Un tel revêtement réfléchissant peut être produit par métallisation, par exemple par dépôt d'aluminium sur la face 2. Dans le cadre de la présente invention, on entend par métallisation tout dépôt en forme de couche mince qui produit une valeur élevée de coefficient de réflexion lumineuse, pour les valeurs de longueur d'onde du rayonnement qui est produit par la source lumineuse utilisée. Cette définition comprend aussi des empilements de plusieurs couches de matériaux différents dont la fonction est de produire une réflexion lumineuse élevée. Par exemple, ce coefficient de réflexion peut être supérieur à 95% pour un rayon lumineux qui est réfléchi à proximité d'un point central de la face intermédiaire 2, et pour une longueur d'onde de 540 nm (nanomètre).

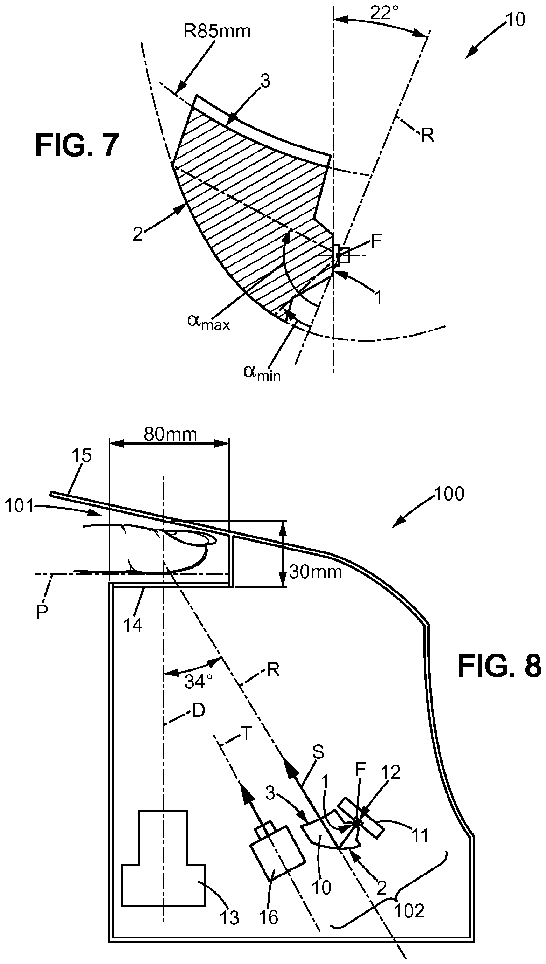

Dans le mode de réalisation des figures 1 à 7, la face intermédiaire 2 possède une forme de portion de paraboloïde de révolution, d'axe noté R (figure 7). De cette façon, un rayon lumineux qui est issu du foyer F de la paraboloïde, en tenant compte de la réfraction au niveau de la face d'entrée 1, est parallèle à l'axe R juste après sa réflexion sur la face intermédiaire 2. Autrement dit, le réflecteur qui est formé par la face intermédiaire 2 a un effet de collimateur. La paraboloïde de révolution peut avoir une valeur de rayon, aussi appelé rayon de parabole, ou paramètre de parabole ou paramètre de conique, qui est de l'ordre de 30,5 mm. Une largeur de cette face 2 selon la direction qui relie les deux côtés latéraux du bloc 10, peut être de 30 mm environ. Dans le mode de réalisation de l'invention qui est illustré, la portion de paraboloïde qui forme la face 2 est telle qu'un rayon lumineux qui est issu du foyer F, et qui est réfléchi sur la face intermédiaire 2 à l'intérieur du bloc 10, forme avec l'axe R avant réflexion un angle qui est compris entre 20° (αₘᵢₙ sur la figure 7) et 105° (αₘₐₓ) environ.

La face d'entrée 1 peut être inclinée de 22° environ par rapport à l'axe R (figure 7), et les tétons 5a et 5b sont conçus pour maintenir à proximité du foyer F la zone d'émission lumineuse de source de lumière qui est associée avec l'optique d'éclairage.

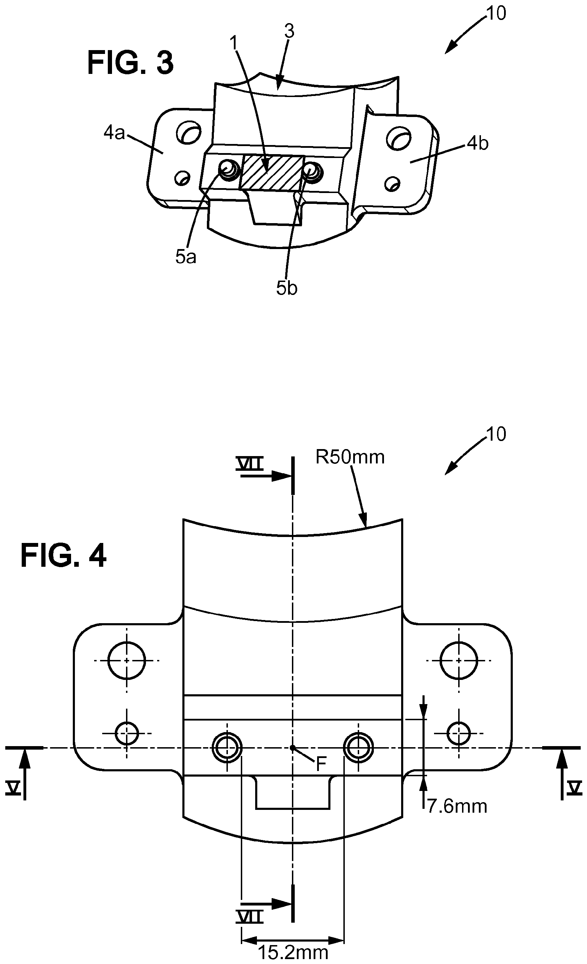

Conformément à l'invention, la face de sortie 3 possède deux valeurs de courbure qui sont différentes selon deux directions qui sont perpendiculaires entre elles et parallèles à la face de sortie 3. Ainsi, la face de sortie 3 est constituée d'une surface dioptrique qui possède un astigmatisme non nul. Par exemple, la face de sortie 3 peut posséder deux rayons de courbure qui sont respectivement égaux à 50 mm (figure 4) et 85 mm (figure 7), correspondant aux deux valeurs de puissance dioptriques -10 dioptries et -5,7 dioptries. Ainsi, la face de sortie 3 a un pouvoir optique divergent qui est différent pour des rayons lumineux qui sont contenus dans le plan de la figure 7, et pour d'autres rayons lumineux qui sont contenus dans un plan perpendiculaire à celui de cette figure. Un faisceau lumineux qui serait issu du foyer F et qui aurait initialement une section transversale circulaire, possèderait donc une section qui est étirée perpendiculairement au plan de la figure 7 après son émergence à travers la face de sortie 3.

La figure 8 est une vue en coupe d'un dispositif de mesure biométrique qui utilise une optique d'éclairage conforme aux figures 1 à 7. Bien qu'une telle optique puisse être avantageusement utilisée dans des dispositifs de mesure biométrique de principes différents, la photographie d'empreintes cutanées est prise comme exemple.

Les références indiquées dans la figure 8 ont les significations suivantes :
- 100: dispositif de saisie d'empreinte cutanée
- 101: zone de passage des doigts
- 102: ensemble d'éclairage
- 10: bloc de matériau transparent formant l'optique d'éclairage
- 11: diode électroluminescente
- 12: zone d'émission de la diode électroluminescente
- 13: appareil de saisie d'image
- 14: fenêtre transparente
- 15: capot de zone de passage de la main
- 16: système de projection de mire

Le bloc d'optique 10 et la diode électroluminescente 11 forment conjointement l'ensemble d'éclairage 102. Un point central de la zone d'émission 12 de la diode électroluminescente 11 est superposé au foyer F de l'optique 10, par exemple de la façon qui a été décrite plus haut en utilisant les tétons 5a et 5b. S désigne un rayon lumineux central du faisceau qui est produit par l'ensemble d'éclairage 102, et R désigne encore l'axe de la paraboloïde de révolution qui définit la forme de la face intermédiaire 2 du bloc 10. Le rayon lumineux S est superposé à l'axe R. Avec les valeurs numériques qui ont été citées plus haut pour l'optique d'éclairage, et lorsque la zone d'émission 12 de la diode électroluminescente 11 est un rectangle d'environ 4,6 mm de longueur et 2,6 mm de largeur, un rendement de collecte de lumière qui est supérieur ou égal à 70% peut être obtenu.

Le rapport entre la longueur et la largeur précitées pour la zone d'émission 12 est d'environ 1,8, alors que le faisceau d'éclairage qui est voulu présente un facteur d'étirement de 1,4 environ. Pour cela, la face de sortie 3 du bloc 10 produit un étirement transversal du faisceau parallèlement à sa direction de plus petite dimension transversale.

Le faisceau lumineux qui est produit par l'ensemble d'éclairage 102 est dirigé vers la zone 101 à travers la fenêtre 14. La fenêtre 14 et le capot 15 délimitent la zone 101, dans laquelle un utilisateur introduit l'extrémité de ses doigts afin que ses motifs cutanés soient saisis en image par l'appareil 13.

L'ensemble d'éclairage 102 peut produire un faisceau lumineux qui est suffisamment intense, et l'appareil 13 possède une sensibilité lumineuse qui est suffisamment élevée, pour que la durée d'exposition qui est nécessaire soit courte, voire très courte. Par exemple, un flash d'éclairement de 4 W (watt) qui est produit par la diode électroluminescente 11 pendant 0,2 ms (milliseconde) est suffisant pour obtenir une image exploitable pour la reconnaissance d'empreinte digitale. La distance d'éclairage, entre la face de sortie 3 du bloc d'optique 10 et la zone 101 peut être comprise entre 15 cm et 25 cm. Dans ces conditions, la saisie en image des motifs cutanés des doigts de l'utilisateur est compatible avec un mouvement transversal de la main, perpendiculairement au plan de la figure 8. Il suffit donc que l'utilisateur passe ses doigts à travers la zone 101 pour qu'une image de ses empreintes digitales soit saisie, avec une qualité d'image qui est suffisante. Eventuellement, la qualité de l'image peut être encore améliorée par un traitement logiciel approprié. En particulier, les conditions de fonctionnement qui viennent d'être citées sont compatibles avec une vitesse de traversée de la zone 101 par la main de l'utilisateur, qui peut être aussi élevée que 0,5 à 1 m·s⁻¹ (mètre par seconde). Le dispositif permet donc de saisir «au vol» («on-the-flight») les empreintes digitales de l'utilisateur, tout en fournissant une qualité d'imagerie qui est suffisante.

Il est aussi nécessaire que la zone 101 soit éclairée avec une intensité lumineuse assez homogène, pour des dimensions de la zone 101 qui sont par exemple de 80±10 mm de profondeur et 30 mm de hauteur dans le plan de la figure 8, et 40 mm perpendiculairement au plan de la figure. De telles dimensions sont adaptées pour saisir les empreintes cutanées des doigts de l'utilisateur, jusqu'à quatre doigts lors d'un même passage de la main à travers la zone 101. Pour certaines applications requérant un niveau de précision moins exigeant, l'acquisition de jusqu'à quatre doigts n'est pas nécessaire. Les dimensions de la zone 101 peuvent alors être significativement réduites. Ainsi, pour un à trois doigts, une dimension de profondeur de 25 mm à 40 mm pourra être suffisante. La largeur pourra aussi être réduite pour être comprise entre 20 mm et 30 mm, notamment pour certaines applications où le suivi du mouvement des doigts n'est pas essentiel. L'appareil de saisie d'image 13 est aussi sélectionné pour présenter une profondeur de champ qui est compatible avec des variations de hauteur de la surface des doigts à l'intérieur de la zone 101.

De façon connue, un contraste des motifs cutanés dans l'image saisie est plus important lorsque la direction d'éclairage, c'est-à-dire l'axe R, est oblique par rapport à la direction de saisie d'image notée D. L'angle entre l'axe R et la direction D est de préférence compris entre 24° et 44°, par exemple égal à 34°. La direction D est perpendiculaire au plan de focalisation P de l'appareil de saisie d'image 13.

Un tel dispositif de saisie d'empreinte cutanée peut être avantageusement complété avec un système de projection de mire 16. L'utilisation d'un tel système 16 est connue notamment des documents FR 2 927 713 et US 2009/208090. Par exemple, la diode électroluminescente 11 produit une lumière verte, et le système 16 produit une lumière rouge. La direction de projection T du système 16 est sensiblement parallèle à l'axe R. Grâce au faible encombrement de l'ensemble d'éclairage 102, l'ensemble 102 et le système 16 peuvent être disposés à proximité l'un de l'autre avec l'axe R et la direction T qui pointent ensemble vers la zone 101, sans utiliser de système de fusion des faisceaux lumineux. L'encombrement, la complexité d'assemblage du dispositif 100 et son prix de revient peuvent ainsi être diminués.

Il est entendu qu'une optique et qu'un ensemble d'éclairage selon l'invention peuvent être utilisés avantageusement dans d'autres systèmes que des dispositifs de saisie d'empreinte cutanée, notamment lorsque la distance d'éclairage est comprise entre 0,5 m (mètre) et 2 m. Par exemple, des dispositifs de saisie de motifs d'iris peuvent aussi incorporer un tel ensemble d'éclairage. L'invention est alors particulièrement avantageuse pour cette application de saisie des motifs d'iris, notamment pour les raisons suivantes :
- le champ optique à éclairer peut être très allongé horizontalement, notamment lorsque les deux yeux sont saisis dans une même image ;
- l'éclairage oblique peut éviter l'effet «yeux rouges» ;
- l'éclairage oblique peut aussi permettre de déplacer un éventuel reflet vers un endroit qui ne provoque aucune gêne, notamment déplacer le reflet en dehors de l'iris ; et
- l'éclairage oblique peut éventuellement aussi augmenter la perception du relief.

L'invention peut aussi être avantageusement appliquée à des systèmes en dehors d'applications biométriques, tels que des systèmes de lecture automatique de documents, notamment de documents d'identité ou de bulletins de jeux.

Il est entendu aussi que l'invention peut être reproduite en modifiant des aspects secondaires de celle-ci, tout en conservant certains au moins des avantages cités. En particulier, l'optique d'éclairage peut être dimensionnée en fonction de la taille de la zone d'émission de la source lumineuse avec laquelle l'optique est destinée à être utilisée. Lorsque cette zone d'émission est carrée avec des côtés de 1 mm, une homothétie de rapport 1/3 peut être appliquée aux dimensions qui ont été citées en référence aux figures 1 à 7, aboutissant à une paraboloïde de révolution pour la face intermédiaire 2 dont le rayon de conique est environ égal à 10 mm. Les deux courbures de la surface dioptrique qui est constituée par la face de sortie 3, peuvent alors correspondre respectivement aux valeurs de puissance optique de -17 dioptries et -30 dioptries.

Enfin, des aspects secondaires de l'invention qui ont été décrits dans le cadre du mode de réalisation particulier utilisé en exemple, peuvent être modifiés. Par exemple, le placement de la source lumineuse par rapport à la face d'entrée de l'optique d'éclairage peut être guidé de multiples façons. De même, les portions de fixation latérales peuvent être remplacées par un nombre quelconque de points d'appui du bloc sur un support externe. Alternativement, le bloc peut être muni d'une couronne d'appui qui entoure la face d'entrée, et qui est destinée à venir au contact d'une partie dédiée du support externe.

## Revendications

1. Dispositif de mesure biométrique (100), **caractérisé en ce qu'**il comprend une optique d'éclairage, ladite optique d'éclairage comprenant :
- un réflecteur paraboloïdal ou ellipsoïdal, formé par une portion de paraboloïde ou d'ellipsoïde à symétrie de révolution autour d'un axe (R) dudit réflecteur, et ayant un foyer (F) ; et
- une surface dioptrique, agencée de sorte qu'un faisceau lumineux qui est issu du foyer puis réfléchi par le réflecteur traverse ensuite la surface dioptrique,
**caractérisée en ce que** la surface dioptrique possède deux valeurs différentes de puissance optique selon deux directions perpendiculaires entre elles et parallèles à ladite surface dioptrique, les dites deux valeurs de puissance optique étant négatives.

2. Dispositif de mesure biométrique (100) selon la revendication 1, dans laquelle le réflecteur est une portion de paraboloïde de révolution qui possède un rayon compris entre 8 mm et 45 mm.

3. Dispositif de mesure biométrique (100) selon la revendication 1 ou 2, dans laquelle une des deux valeurs de puissance optique de la surface dioptrique est comprise entre 20% et 80% de l'autre des dites deux valeurs.

4. Dispositif de mesure biométrique (100) selon l'une quelconque des revendications précédentes, dans laquelle une première des deux valeurs de puissance optique de la surface dioptrique est comprise entre -30 dioptries et 0 dioptrie, et une seconde des deux valeurs de puissance optique de la surface dioptrique est comprise entre -40 dioptries et -1 dioptrie.

5. Dispositif de mesure biométrique (100) selon l'une quelconque des revendications précédentes, comprenant un bloc (10) de matériau transparent à deux extrémités latérales opposées, avec une face d'entrée (1), une face intermédiaire (2) et une face de sortie (3), les trois faces étant disposées entre les deux extrémités latérales,
la face intermédiaire (2) étant métallisée et constituant le réflecteur,
la face de sortie (3) constituant la surface dioptrique, et
la face d'entrée (1) étant située à une distance du foyer inférieure à 15% d'un rayon de conique du réflecteur,
de sorte que le faisceau lumineux qui est issu du foyer pénètre dans le bloc (10) de matériau transparent par la face d'entrée (1), subisse une réflexion sur la face intermédiaire (2) à l'intérieur dudit bloc, et ressorte du bloc en traversant la face de sortie (3).

6. Dispositif de mesure biométrique (100)selon la revendication 5, dans laquelle le bloc (10) de matériau transparent comporte deux portions de fixation (4a, 4b) situées aux deux extrémités latérales opposées, et adaptées pour fixer ledit bloc sur un support externe sans occulter le faisceau lumineux qui pénètre dans le bloc par la face d'entrée (1), est réfléchi sur la face intermédiaire (2), puis ressort par la face de sortie (3).

7. Dispositif de mesure biométrique (100) selon l'une quelconque des revendications précédentes, **caractérisé en ce qu'**il comprend un ensemble d'éclairage (102), ledit ensemble d'éclairage comprenant l'optique d'éclairage et une source de lumière à diode électroluminescente (11) placée sur le foyer (F) du réflecteur.

8. Dispositif de mesure biométrique (100) selon la revendication 7 en combinaison avec la revendication 5 ou 6, dans lequel le bloc (10) de matériau transparent comporte des moyens de positionnement (5a, 5b) disposés à proximité de la face d'entrée (1), et adaptés pour maintenir la source de lumière devant ladite face d'entrée lorsque ladite source de lumière est engagée dans lesdits moyens de positionnement.

9. Dispositif de mesure biométrique (100) selon la revendication 8, dans lequel les moyens de positionnement (5a, 5b) sont adaptés en outre pour déterminer un espacement entre la source de lumière et la face d'entrée (1) du bloc (10) de matériau transparent, lorsque ladite source de lumière est engagée dans lesdits moyens de positionnement.

10. Dispositif de mesure biométrique (100) selon la revendication 8 ou 9, dans laquelle la face d'entrée (1) du bloc (10) de matériau transparent s'étend parallèlement à une zone d'émission lumineuse (12) de la source de lumière, lorsque ladite source de lumière est engagée dans lesdits moyens de positionnement (5a, 5b).

11. Dispositif de mesure biométrique (100) selon l'une quelconque des revendications 7 à 10, comprenant en outre un appareil de saisie d'image (13), ledit appareil ayant un axe optique formant direction de saisie d'image (D), dans lequel une distance d'éclairement mesurée entre la surface dioptrique d'une part, et d'autre part un point d'intersection entre l'axe (R) du réflecteur de l'optique d'éclairage (10) et l'axe optique formant direction de saisie d'image (D), est comprise entre 15 cm et 25 cm le long dudit axe du réflecteur.

12. Dispositif de mesure biométrique (100) selon la revendication 11, dans lequel un angle entre l'axe (R) du réflecteur de l'optique d'éclairage (10) et l'axe optique formant direction de saisie d'image (D), est compris entre 24° et 44°.

13. Dispositif de mesure biométrique (100) selon les revendications 11 et 12, dans lequel la diode électroluminescente (11) est adaptée pour produire des flashes lumineux chacun ayant une puissance d'au moins 2 W et une durée inférieure à 0,4 ms.

## Patentansprüche

1. Biometrische Messvorrichtung (100), **dadurch gekennzeichnet, dass** sie eine Beleuchtungsoptik umfasst, wobei diese Beleuchtungsoptik Folgendes umfasst:
- einen paraboloidischen oder ellipsoidischen Reflektor, der aus einem um eine Achse (R) des Reflektors rotationssymmetrischen Paraboloid- oder Ellipsoidabschnitt gebildet ist und einen Brennpunkt (F) besitzt, und
- eine lichtbrechende Oberfläche, die so angeordnet ist, dass ein Lichtstrahl, der aus dem Brennpunkt kommt und danach vom Reflektor reflektiert wird, anschließend die lichtbrechende Oberfläche durchquert,
**dadurch gekennzeichnet, dass** die lichtbrechende Oberfläche entlang von zwei zueinander rechtwinkligen und parallel zu der lichtbrechenden Fläche verlaufenden Richtungen zwei verschiedene optische Leistungswerte besitzt, wobei die beiden optischen Leistungswerte negativ sind.

2. Biometrische Messvorrichtung (100) nach Anspruch 1, wobei der Reflektor ein Rotationsparaboloidabschnitt ist, der einen Radius zwischen 8 mm und 45 mm besitzt.

3. Biometrische Messvorrichtung (100) nach Anspruch 1 oder 2, wobei einer der beiden optischen Leistungswerte der lichtbrechenden Oberfläche zwischen 20 % und 80 % des anderen der beiden Werte beträgt.

4. Biometrische Messvorrichtung (100) nach einem der vorhergehenden Ansprüche, wobei ein erster der beiden optischen Leistungswerte der lichtbrechenden Oberfläche zwischen -30 Dioptrien und 0 Dioptrien beträgt und ein zweiter der beiden optischen Leistungswerte der lichtbrechenden Fläche zwischen -40 Dioptrien und -1 Dioptrie beträgt.

5. Biometrische Messvorrichtung (100) nach einem der vorhergehenden Ansprüche, umfassend einen Block (10) aus transparentem Material mit zwei entgegengesetzten seitlichen Enden, mit einer Eintrittsfläche (1), einer Zwischenfläche (2) und einer Austrittsfläche (3), wobei die drei Flächen zwischen den beiden seitlichen Enden angeordnet sind,
wobei die Zwischenfläche (2) metallisiert ist und den Reflektor darstellt,
die Austrittsfläche (3) die lichtbrechende Oberfläche darstellt und
die Eintrittsfläche (1) in einem Abstand vom Brennpunkt liegt, der weniger als 15 % eines Konusradius des Reflektors beträgt, so dass der aus dem Brennpunkt kommende Lichtstrahl in den Block (10) aus transparentem Material durch die Eintrittsfläche (1) eindringt, eine Reflexion an der Zwischenfläche (2) im Innern des Blocks erfährt und wieder aus dem Block austritt, indem er die Austrittsfläche (3) durchquert.

6. Biometrische Messvorrichtung (100) nach Anspruch 5, wobei der Block (10) aus transparentem Material zwei Befestigungsabschnitte (4a, 4b) umfasst, die an den beiden entgegengesetzten seitlichen Enden liegen und geeignet sind, den Block an einem externen Halter zu befestigen, ohne den Lichtstrahl zu verdecken, der in den Block durch die Eintrittsfläche (1) eintritt, an der Zwischenfläche (2) reflektiert wird und dann durch die Austrittsfläche (3) wieder austritt.

7. Biometrische Messvorrichtung (100) nach einem der vorhergehenden Ansprüche, **dadurch gekennzeichnet, dass** sie eine Beleuchtungsanordnung (102) umfasst, wobei die Beleuchtungsanordnung die Beleuchtungsoptik und eine Lichtquelle mit Elektrolumineszenzdiode (11), die im Brennpunkt (F) des Reflektors platziert ist, umfasst.

8. Biometrische Messvorrichtung (100) nach Anspruch 7 in Kombination mit Anspruch 5 oder 6, wobei der Block (10) aus transparentem Material Positionierungsmittel (5a, 5b) umfasst, die in der Nähe der Eintrittsfläche (1) angeordnet sind und geeignet sind, die Lichtquelle vor der Eintrittsfläche zu halten, wenn die Lichtquelle in die Positionierungsmittel eingesetzt ist.

9. Biometrische Messvorrichtung (100) nach Anspruch 8, wobei die Positionierungsmittel (5a, 5b) darüber hinaus geeignet sind, einen Zwischenraum zwischen der Lichtquelle und der Eintrittsfläche (1) des Blocks (10) aus transparentem Material zu bestimmen, wenn die Lichtquelle in die Positionierungsmittel eingesetzt ist.

10. Biometrische Messvorrichtung (100) nach Anspruch 8 oder 9, wobei sich die Eintrittsfläche (1) des Blocks (10) aus transparentem Material parallel zu einer Lichtaussendungszone (12) der Lichtquelle erstreckt, wenn die Lichtquelle in die Positionierungsmittel (5a, 5b) eingesetzt ist.

11. Biometrische Messvorrichtung (100) nach einem der Ansprüche 7 bis 10, die darüber hinaus ein Bilderfassungsgerät (13) umfasst, wobei das Gerät eine die Bilderfassungsrichtung (D) bildende optische Achse besitzt,
wobei ein Beleuchtungsabstand, der zwischen der lichtbrechenden Oberfläche einerseits und einem Schnittpunkt zwischen der Achse (R) des Reflektors der Beleuchtungsoptik (10) und der die Bilderfassungsrichtung (D) bildenden optischen Achse andererseits gemessen wird, zwischen 15 cm und 25 cm entlang der Achse des Reflektors beträgt.

12. Biometrische Messvorrichtung (100) nach Anspruch 11, wobei ein Winkel zwischen der Achse (R) des Reflektors der Beleuchtungsoptik (10) und der die Bilderfassungsrichtung (D) bildenden optischen Achse zwischen 24° und 44° beträgt.

13. Biometrische Messvorrichtung (100) nach den Ansprüchen 11 und 12, wobei die Elektrolumineszenzdiode (11) geeignet ist, Lichtblitze zu erzeugen, die jeweils eine Leistung von mindestens 2 W und eine Dauer von weniger als 0,4 ms haben.

## Claims

1. Biometric measurement device (100), **characterized in that** it comprises a lighting lens, said lighting lens comprising:
- a paraboloidal or ellipsoidal reflector formed by a portion of a paraboloid or ellipsoid with symmetry of revolution about an axis (R) of said reflector, and having a focus point (F); and
- a dioptric surface arranged so that a light beam that originates from the focus point and is then reflected by the reflector next passes through the dioptric surface,
**characterized in that** the dioptric surface has two different refractive power values along two directions perpendicular to each other and parallel to said dioptric surface, said two refractive power values being negative.

2. Biometric measurement device (100) according to claim 1, in which the reflector is a portion of a paraboloid of revolution that has a radius of between 8 mm and 45 mm.

3. Biometric measurement device (100) according to claim 1 or 2, in which one of the two refractive power values of the dioptric surface is between 20% and 80% of the other one of said two values.

4. Biometric measurement device (100) according to any one of the preceding claims, in which a first one of the two refractive power values of the dioptric surface is between -30 dioptres and 0 dioptre, and a second one of the two refractive power values of the dioptric surface is between -40 dioptres and -1 dioptre.

5. Biometric measurement device (100) according to any one of the preceding claims, comprising a block (10) of transparent material with two opposite lateral ends, with an entry face (1), an intermediate face (2) and an exit face (3), the three faces being disposed between the two lateral ends,
the intermediate face (2) being metallised and constituting the reflector,
the exit face (3) constituting the dioptric surface, and
the entry face (1) being situated at a distance from the focus point (F) less than 15% of a conical radius of the reflector,
so that the light beam that originates from the focus point enters the block (10) of transparent material through the entry face (1), undergoes reflection on the intermediate face (2) inside said block, and emerges from the block by passing through the exit face (3).

6. Biometric measurement device (100) according to claim 5, in which the block (10) of transparent material comprises two fixing portions (4a, 4b) situated at the two opposite lateral ends, and suitable for fixing said block to an external support without obscuring the light beam that enters the block through the entry face (1), is reflected on the intermediate face (2) and then emerges through the exit face (3).

7. Biometric measurement device (100) according to any one of the preceding claims, **characterized in that** it further comprises a lighting assembly (102), said lighting assembly comprising the lighting lens and a light emitting diode light source (11) which is placed on the focus point (F) of the reflector.

8. Biometric measurement device (100) according to claim 7 in combination with claim 5 or 6, in which the block (10) of transparent material comprises positioning means (5a, 5b) arranged close to the entry face (1), and suitable for maintaining the light source in front of said entry face when light source is engaged in said positioning means.

9. Biometric measurement device (100) according to claim 8, in which the positioning means (5a, 5b) are also suitable for determining a spacing between the light source and the entry face (1) of the block (10) of transparent material, when said light source is engaged in said positioning means.

10. Biometric measurement device (100) according to claim 8 or 9, in which the entry face (1) of the block (10) of transparent material extends parallel to a light emission zone (12) of the light source, when said light source is engaged in said positioning means (5a, 5b).

11. Biometric measurement device (100) according to any one of claims 7 to 10, further comprising an image capture apparatus (13), said apparatus having an optical axis forming an image capture direction (D),
in which a lighting distance measured between the dioptric surface on the one hand and on the other hand a point of intersection between the axis (R) of the lighting lens reflector (10) and the optical axis forming the image capture direction (D) is between 15 cm and 25 cm along said axis of the reflector.

12. Biometric measurement device (100) according to claim 11, in which an angle between the axis (R) of the lighting lens reflector (10) and the optical axis forming an image capture direction (D) is between 24° and 44°.

13. Biometric measurement device (100) according to claims 11 and 12, in which the light emitting diode (11) is suitable for producing light flashes each having a power of at least 2 W and a duration of less than 0.4 ms.
